# FASCICULE DE BREVET EUROPEEN

(11) **EP 0 907 536 B1**
(45) Date de publication et mention de la délivrance du brevet: **12.12.2001**
(21) Numéro de dépôt: 97924091.8
(22) Date de dépôt: 14.05.1997
(51) Int. Cl.: B60T 11/16, B60R 21/00

(54) **MAITRE-CYLINDRE A DEFLECTEUR DE CHOC RAPPORTE**
HAUPTZYLINDER MIT ANGEBAUTEM STOSSABWEISER
MASTER CYLINDER WITH SHOCK DEFLECTOR INSERT

(30) Priorité: 24.06.1996 FR 9607794
(43) Date de publication de la demande: 14.04.1999
(73) Titulaire: Bosch Systemes de Freinage, 93700 Drancy (FR)
(72) Inventeur: VERBO, Ulysse, F-93600 Aulnay-sous-Bois (FR); VALENZUELA, Alfonso, F-93700 Drancy (FR)
(74) Mandataire: Bentz, Jean-Paul
(86) Numéro de dépôt international: FR9700853
(87) Numéro de publication internationale: WO9749589

(56) Documents cités:
- EP-A- 0 492 191
- FR-A- 2 437 337
- FR-A- 2 482 547
- GB-A- 2 230 493

## Description

La présente invention concerne un maître-cylindre comprenant un corps cylindrique orienté suivant un axe principal et présentant une extrémité libre, une extrémité liée, et une tige de piston saillant axialement de l'extrémité liée.

En pratique, tous les maîtres-cylindres utilisés dans les systèmes de freinage hydrauliques des véhicules à moteur depuis l'invention de ces derniers répondent à cette définition.

Cependant l'accroissement des normes de sécurité a révélé l'utilité de faire évoluer les maîtres-cylindres d'une façon telle qu'un choc frontal appliqué au véhicule ne puisse être facilement transmis à la jambe du conducteur par le maître-cylindre, même lorsque le choc intervient alors que le conducteur appuie de tout son poids sur la pédale de frein.

Pour ce faire, il est connu, au moins par certaines réalisations récentes, de donner localement au maître-cylindre une forme grâce à laquelle il peut s'escamoter latéralement lorsqu'il reçoit l'impact axial d'une pièce du moteur déplacée par un choc frontal du véhicule.

Une telle solution présente cependant deux inconvénients majeurs.

D'une part, dans la mesure où l'aménagement interne du compartiment moteur d'un véhicule est pratiquement spécifique à chaque véhicule, et où par conséquent l'angle d'impact le plus dangereux sur le maître-cylindre varie d'un véhicule à l'autre, la solution connue oblige à concevoir un maître-cylindre pour chaque véhicule, ce qui conduit à des délais et à des coûts de développement et de fabrication tout à fait prohibitifs.

D'autre part, dans la mesure où un maître-cylindre doit être fabriqué dans un métal présentant des caractéristiques physiques adaptées aux conditions de fabrication, d'étanchéité, et de fiabilité que doit satisfaire un maître-cylindre, tout excédent de ce métal en vue de remplir une fonction de déflecteur de choc entraîne à la fois un surcoût important et un risque de dégradation des performances propres du maître-cylindre.

Il est également connu, par le document GB-A-2 230 493, de monter sur le moteur un déflecteur qui, en cas de choc frontal appliqué au véhicule, défléchit le maître-cylindre vers une direction latérale, cette solution ayant l'inconvénient de ne pas permettre de donner un angle faible au déflecteur sans en augmenter de façon excessive l'encombrement dans le compartiment moteur.

La présente invention se situe dans ce contexte, et a pour but de proposer un maître-cylindre exempt de tels inconvénients.

A cette fin, le maître-cylindre de la présente invention est essentiellement caractérisé en ce qu'il comporte un déflecteur de choc rapporté coiffant l'extrémité libre du corps, monté de façon amovible sur le corps, et présentant au moins une surface déflectrice inclinée de façon oblique par rapport à l'axe principal.

Dans un mode de réalisation possible de l'invention, le déflecteur de choc présente une partie antérieure, une partie postérieure, et une nervure inférieure, la partie antérieure recouvrant l'extrémité libre du corps cylindrique, la partie postérieure étant dotée de deux pattes opposées formant pince enserrant entre elles, de façon amovible, l'extrémité liée du corps cylindrique, et la nervure inférieure reliant les parties antérieure et postérieure et présentant une hauteur croissant progressivement de la partie antérieure vers la partie postérieure.

En outre, la nervure inférieure présente de préférence au moins une variation de pente, et peut avantageusement être délimitée par un bord dont une portion au moins n'est pas coplanaire avec l'axe principal du maître-cylindre.

La partie antérieure du déflecteur de choc peut elle-même être bombée pour constituer au moins partiellement la surface déflectrice, et elle peut être vissée sur le corps du maître-cylindre pour permettre une meilleure transmission à de dernier des forces de déformation agissant en cas de choc.

D'autres caractéristiques et avantages de l'invention ressortiront clairement de la description qui en est faite ci-après, à titre indicatif et nullement limitatif, en référence aux figures annexées, parmi lesquelles :
- la Figure 1 est une vue de face d'un maître-cylindre conforme à l'invention;
- la Figure 2 est une vue en bout d'un tel maître-cylindre, observé du côté de sa partie antérieure;
- la Figure 3 est une vue de face d'un déflecteur de choc utilisable pour un maître-cylindre conforme à l'invention;

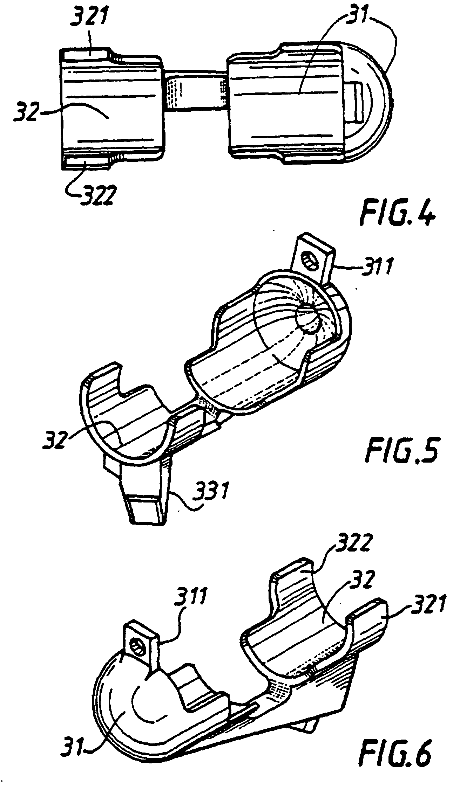

- la Figure 4 est une vue de dessus du déflecteur de choc de la figure 3;
- la Figure 5 est une vue en perspective du déflecteur de choc de la figure 3, observé du côté de sa partie postérieure; et
- la Figure 6 est une vue en perspective du déflecteur de choc de la figure 3, observé du côté de sa partie antérieure.

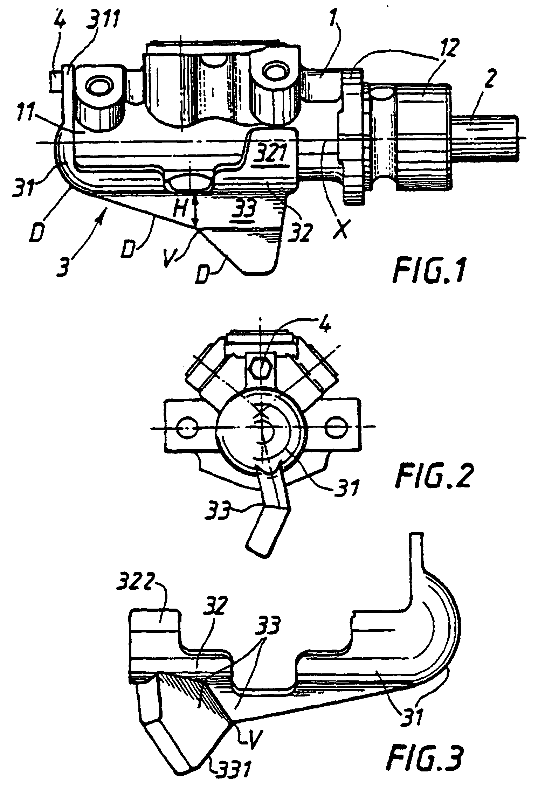

Comme le montre la figure 1, l'invention concerne un maître-cylindre comprenant un corps cylindrique 1 orienté suivant un axe principal X et présentant une extrémité libre 11, une extrémité liée 12, et une tige de piston 2 saillant axialement de l'extrémité liée 12.

Selon l'invention, ce maître-cylindre comporte un déflecteur de choc rapporté 3 coiffant l'extrémité libre 11 du corps 1, monté de façon amovible sur le corps 1, et présentant au moins une surface déflectrice D inclinée de façon oblique par rapport à l'axe principal X.

Dans le mode de réalisation illustré, le déflecteur de choc 3 présente une partie antérieure 31, une partie postérieure 32, et une nervure inférieure 33, la partie antérieure 31 recouvrant l'extrémité libre 11 du corps cylindrique, la partie postérieure 32 étant dotée de deux pattes opposées 321, 322 formant pince enserrant entre elles, de façon amovible, l'extrémité liée 12 du corps cylindrique, et la nervure inférieure 33 reliant les parties antérieure et postérieure et présentant une hauteur H croissant progressivement de la partie antérieure 31 vers la partie postérieure 32.

Comme le montrent les figures, la nervure inférieure 33 peut présenter au moins une variation de pente V.

En outre, comme c'est le cas du déflecteur tel que représenté aux figures 3 et 5, une portion 331 du bord de la nervure inférieure 33 peut ne pas être coplanaire avec l'axe principal X, de manière à permettre qu'un impact frontal applique au déflecteur un effort de torsion qui est communiqué au corps 1 du maître-cylindre, ou qui escamote le déflecteur lui-même.

Pour plus de sécurité, la partie antérieure 31 du déflecteur de choc 3 peut être au moins localement bombée pour constituer elle-même une surface déflectrice D.

En outre, la partie antérieure 33 du déflecteur de choc 3 peut être rendue solidaire du corps 1 du maître-cylindre au moyen d'une vis 4 traversant une languette 311 de la partie antérieure du déflecteur et engagée dans le corps 1 du maître-cylindre.

## Revendications

1. Maître-cylindre comprenant un corps cylindrique (1) orienté suivant un axe principal (X) et présentant une extrémité libre (11), une extrémité liée (12), et une tige de piston (2) saillant axialement de l'extrémité liée, **caractérisé en ce qu'**il comporte un déflecteur de choc rapporté (3) coiffant l'extrémité libre (11) du corps (1), monté de façon amovible sur le corps (1), et présentant au moins une surface déflectrice (D) inclinée de façon oblique par rapport à l'axe principal (X).

2. Maître-cylindre suivant la revendication 1, **caractérisé en ce que** le déflecteur de choc (3) présente une partie antérieure (31), une partie postérieure (32), et une nervure inférieure (33), la partie antérieure (31) recouvrant l'extrémité libre (11) du corps cylindrique, la partie postérieure (32) étant dotée de deux pattes opposées (321, 322) formant pince enserrant entre elles, de façon amovible, l'extrémité liée (12) du corps cylindrique, et la nervure inférieure (33) reliant les parties antérieure et postérieure et présentant une hauteur (H) croissant progressivement de la partie antérieure (31) vers la partie postérieure (32).

3. Maître-cylindre suivant la revendication 2, **caractérisé en ce que** la nervure inférieure (33) présente au moins une variation de pente (V).

4. Maître-cylindre suivant la revendication 2 ou 3, **caractérisé en ce que** la nervure inférieure (33) est délimitée par un bord dont une portion (331) au moins n'est pas coplanaire avec ledit axe principal.

5. Maître-cylindre suivant la revendication 3, **caractérisé en ce que** la partie antérieure du déflecteur de choc (3) est bombée.

6. Maître-cylindre suivant la revendication 5, **caractérisé en ce que** la partie antérieure du déflecteur de choc (3) est vissée sur le corps (1) du maître-cylindre.

## Patentansprüche

1. Hauptzylinder mit einem zylindrischen, entlang einer Hauptachse (X) orientierten Körper (1), der ein freies Ende (11), ein verbundenes Ende (12) und eine Kolbenstange (2) aufweist, die axial über das verbundene Ende hinausragt, **dadurch gekennzeichnet, daß** er einen angebauten Stoßabweiser (3) umfaßt, der das freie Ende (11) des Körpers (1) überdeckt, abnehmbar an den Körper (1) montiert ist und der wenigstens eine Abweisfläche (D) aufweist, die schräg bezüglich der Hauptachse (X) geneigt ist.

2. Hauptzylinder nach Anspruch 1, **dadurch gekennzeichnet, daß** der Stoßabweiser (3) einen vorderen Teil (31), einen hinteren Teil (32) und eine untere Rippe (33) aufweist, wobei der vordere Teil (31) das freie Ende (11) des zylindrischen Körpers überdeckt, der hintere Teil (32) mit zwei gegenüberliegenden Fingern (321, 322) versehen ist, die, eine Umklammerung bildend, zwischen sich das verbundene Ende (12) des zylindrischen Körpers abnehmbar einspannen, und die untenliegende Rippe (33) den vorderen Teil mit dem hinteren Teil verbindet sowie eine Höhe (H) aufweist, die von dem vorderen Teil (31) zu dem hinteren Teil (32) stetig zunimmt.

3. Hauptzylinder nach Anspruch 2, **dadurch gekennzeichnet, daß** die untere Rippe (33) wenigstens eine Änderung (V) der Steigung aufweist.

4. Hauptzylinder nach den Ansprüchen 2 oder 3, **dadurch gekennzeichnet, daß** die untere Rippe (33) durch einen Rand begrenzt ist, von dem wenigstens ein Teil (331) nicht koplanar zu der Hauptachse ist.

5. Hauptzylinder nach Anspruch 3, **dadurch gekennzeichnet, daß** der vordere Teil des Stoßabweisers (3) gewölbt ist.

6. Hauptzylinder nach Anspruch 5, **dadurch gekennzeichnet, daß** der vordere Teil des Stoßabweisers (3) auf den Körper (1) des Hauptzylinders geschraubt ist.

## Claims

1. Master cylinder comprising a cylindrical body (1) pointing along a main axis (X) and having a free end (11), an attached end (12), and a piston rod (2) projecting axially from the attached end, **characterized in that** it includes an attached impact deflector (3) covering the free end (11) of the body (1), mounted removably on the body (1) and having at least one deflecting surface (D) which is inclined obliquely to the main axis (X).

2. Master cylinder according to Claim 1, **characterized in that** the impact deflector (3) has a front part (31), a rear part (32), and a lower rib (33), the front part (31) covering the free end (11) of the cylindrical body, the rear part (32) being fitted with two opposed lugs (321, 322) which form a clamp gripping the attached end (12) of the cylindrical body removably between them, and the lower rib (33) linking the front and rear parts and having a height (H) which increases progressively from the front part (31) towards the rear part (32).

3. Master cylinder according to Claim 2, **characterized in that** the lower rib (33) has at least one variation in slope (V).

4. Master cylinder according to Claim 2 or 3, **characterized in that** the lower rib (33) is delimited by an edge, at least one portion (331) of which is not coplanar with the said main axis.

5. Master cylinder according to Claim 3, **characterized in that** the front part of the impact deflector (3) is domed.

6. Master cylinder according to Claim 5, **characterized in that** the front part of the impact deflector (3) is screwed to the body (1) of the master cylinder.
